# EUROPEAN PATENT APPLICATION

(11) **EP 4 524 731 A1**
(43) Date of publication of application: **19.03.2025**
(21) Application number: 23208664.5
(22) Date of filing: 08.11.2023
(51) Int. Cl.: G06F 9/445, G06F 9/54

(54) **A MEMORY MANAGEMENT UNIT-LESS (MMU-LESS) DEVICE AND A METHOD FOR USE IN PREPARING SOFTWARE FOR THE MMU-LESS DEVICE**

(30) Priority: 13.09.2023 EP 23197285
(71) Applicant: Flipper Technologies Ltd, London EC4M 7LF (GB)
(72) Inventor: Kutuzov, Aleksandr, Kawasaki (JP); Gavrilov, Sergei, Dubai (AE); Kotomin, Ivan, Tbilisi (GE)
(74) Representative: Nezlobin, Nikolai

(57) **Abstract**

The disclosure relates to a memory management unit-less (MMU-less) device for receiving and executing a program including an invocation of an application program interface (API) of the MMU-less device. The MMU-less device includes an at least one processing unit, a RAM, a built-in non-volatile memory storing API entities, and at least two or three antennas, each for receiving and/or transmitting signals at at least its respective associated frequency. The built-in non-volatile memory stores an API table including a sorted plurality of hash values, calculated based on a plurality of names of API entities and paired with a plurality of addresses of the API entities.

## Description

### TECHNICAL FIELD

The present disclosure generally relates to techniques for increasing usability or applicability of a memory management unit-less (MMU-less) device (e.g. with a microcontroller chip unit, MCU), a random access memory (RAM), and an interface for receiving data from an external communication device or memory by respectively configuring or customizing its software. These techniques are useful, for a particular example, in a multi-purpose or multi-application standalone embedded device having a plurality of antennas for exploration of various radio protocols and access systems, such as the device called Flipper Zero; but also they may be used in various other M MU-less devices, including those single-purpose devices, which would benefit from an increased flexibility, adaptability or customizability of the software. Also, the present disclosure relates to computer-implemented techniques, including methods, for efficiently, conveniently, and reliably producing firmware and software for the MMU-less device, as well as for efficiently, conveniently and reliably producing a software development kit (SDK) and other tools for producing software for the MMU-less device (and, thus, again for increasing usability or applicability of the MMU-less device).

### BACKGROUND

A memory management unit (MMU), sometimes called paged memory management unit (PMMU), is a computer hardware unit having all memory references passed through itself, primarily performing the translation of virtual memory addresses to physical addresses. Due to constraints on cost, size, and power consumption its use is often avoided in relatively low-power, inexpensive embedded systems, used in many applications, from wireless sensor networks to consumer electronics. Also, processing power and physical memory are tightly limited in these systems. Hence, various techniques have been developed for using more effectively internal resources of the MMU-less devices, i.e. microcontroller units lacking the MMU. For example, Non-Patent Literature 1 is focused on techniques aimed at increasing usable memory in sensor network nodes with no changes to hardware and with no or minimal changes to applications. At the same time, these techniques have been described in Non-Patent Literature 1 as usable in any memoryconstrained embedded system without a MMU.

It is desirable to be able to install programs, for example, applications, on a MMU-less device separately from its firmware, such as, for example, operating system (OS). For example, according to Non-Patent Literature 2, relating to the Stratify operating system, this is one of the OS's biggest software challenges. Overcoming this challenge contributes to both ease-of-use and portability (and therefore the usability and applicability of the MMU-less device). When it is possible to install just the application, work of integrating and compiling the OS with the application is avoided. Also, it becomes possible to distribute the binary file to different devices running the OS, i.e. the differences in memory address spaces, for the RAM and built-in non-volatile memory, as well as differences between addresses of similar entities, in different devices become irrelevant or at least less relevant for distribution of the binary file with the application.

In many cases, different programs, such as applications, components and modules are stored in Executable and Linkable Format (ELF, elf). This format has been adopted by many different operating systems on many different hardware platforms.

According to the Non-Patent Literature 2, without a MMU, installing independent or standalone compiled programs (i.e. programs, compiled and linked separately from the OS or other firmware of the MMU-less device) can be done using one of several approaches:
- Implement an ELF parser in the embedded installer;
- Compile using position-independent code/executables (PIC or PIE) and have the embedded installer update the global offset table when installing the firmware;
- Compile using relocatable code and translate the memory locations of the binary program using an embedded installer.

According to the Non-Patent Literature 2, Stratify OS used the last approach. Apparently, it was not applicable to the ELF files. As for the ELF, according to the Non-Patent Literature 2, the disadvantage of using an ELF parser is that it requires more processing on the firmware side than the other options, and this means that a larger portion of precious flash memory is dedicated to installing programs.

Non-Patent Literature 1: Bai, L. S., Yang, L., and Dick, R. P. 2009. MEMMU: Memory expansion for MMU-less embedded systems. ACM Trans. Embedd. Comput. Syst. 8, 3, Article 23 (April 2009).

Non-Patent Literature 2: https://blog.stratifylabs.dev/device/2014-05-03-Application-without-MMU/ (2014), accessed in 2023.

### DESCRIPTION

The inventors of the present disclosure have considered that in some cases it is desirable to receive by the MMU-less device (with an installed firmware) an independent program, for example, an application, component or module, or a number of them, for execution by the MMU-less device. The program may be loaded into a RAM of the MMU/less device or, in some special cases in which the delay due to loading and the software speed is of not a high importance, loaded or recorded into a built-in non-volatile memory of the MMU-less device (i.e., installed). This would allow increasing the applicability and/or customizability of the MMU-less device, i.e. its usability. The program would invoke an application program interface (API) of the MMU-less device (in other words, of its firmware). It is desirable to allow an executable file, from which such a program is to be received, to be in the ELF format. Also, it is desirable to efficiently, conveniently, and reliably produce such firmware and software for the MMU-less device that increases usability or applicability of the MMU-less device.

For a particular example, the inventors of the present disclosure have sought how to contribute to the applicability and/or customizability of a multi-application standalone embedded device having a number of antennas. A non-limiting example of such a device is presented by Flipper Zero. It is a handheld device based on a MMU-less microcontroller or chip, and has been developed to incorporate a range of radio modules.

Hence, the MMU-less device, to which the techniques of the present disclosure apply, may be, for example, a single-purpose or a multi-purpose and multi-application device. It may be an embedded device, or a standalone embedded device. It may be of a configuration including a combination or a sub-combination from Sub-GHz, NFC (near-Field communication), LF RFID (low frequency radio-frequency identification) and BLE (bluetooth low energy) modules, to allow users to interact with modern access control systems and wireless communication protocols. Additionally, it may include an infrared (IR) transceiver and/or a specialized 1-Wire connector, enabling professionals to work with devices utilizing IR communication and/or the iButton contact keys and readers. Further, the device may be equipped with any combination or a sub-combination of General Purpose Input/Output (GPIO) pins supporting i2c (inter-integrated circuit), UART (universal asynchronous receiver / transmitter), SPI (serial peripheral interface), and SWD (serial wire debug) interfaces. The above features enable users to connect and interact with various electronic devices, sensors, and components, providing a tool for testing such equipment, and comprehensive experience in access control and cybersecurity.

Then, the device may include a built-in USB HID (universal serial bus human interface devices) device emulation functionality, for example, for facilitating professionals to conduct penetration testing on connected computer systems. At the same time, the device may be used for educational purposes.

Also, with its built-in battery, graphic display, control buttons (which may be d-pad (directional pad), OK and BACK buttons), and a microSD-card slot, the device may provide for an autonomous usage. Additionally, it may include a buzzer and a vibration motor.

Furthermore, in some configurations, the device may be adapted to communicate with companion mobile applications via BLE for data synchronization and remote control, for performing a task on the distance, for example, a security research task or the equipment testing. Also, software and firmware updates may be communicated to the device via, for example, BLE.

That is, the inventors have sought for novel ways to implement the dynamic loading process or the installation. The MMU-less device may be configured according to any combination of the features mentioned above, but it has an at least one processing unit, which may be a central processing unit (CPU); the RAM; and a built-in non-volatile memory storing API entities. The MMU-less has an interface for receiving the program, for example, from an external communication device or an external memory, for example, a non-volatile chip storage.

Herein, the RAM may be implemented, for example, by SRAM (static RAM). The built-in non-volatile memory may be located, for example, on the same microcontroller unit chip (MCU) with the CPU. The built-in non-volatile memory, may be rewritable, in full or in part. It may be presented by electrically erasable programmable read-only memory (EEPROM) that enables individual bytes of data to be erased and reprogrammed, or by flash memory, i.e. electrically erasable programmable read-only memory that enables programming and erasure of larger blocks, or their combination. The external memory may belong to another device, such as a hard drive or a solid-state drive (SSD) of a general purpose computer; or it may be removable from the MMU-less device or detachable from the MMU-less device housing, such as an external CD-ROM, but in some cases it may be even soldered to the device housing, but still not located on the same chip with the CPU. That is, the external memory may be non-volatile memory. Also, it may be presented by a stand-alone device; and/or portable device; and/or a card chip, for example, by a NAND/NOR chip, NAND/NOR flash memory, or microSD card; and/or a memory carrier with a medium readable by the passive memory reading. The external memory differs from the built-in non-volatile memory, for example, by addressing from the processing unit. The CPU may communicate with the built-in non-volatile memory faster than with the external memory. In many cases, MCU executes instructions directly from the built-in non-volatile memory, such as the flash memory. This does not mean that in embedded applications MCU can execute code only from the built-in non-volatile memory; but while the MCU also could execute code from the RAM, typically the RAM size is much smaller than the built-in non-volatile memory size.

Various interfaces and connections are suitable for establishing the communication between the MMU-less device and the external communication device or the external memory: WiFi, USB, etc. For example, the MMU-less device may include a driver and/or a port for establishing such a communication. Also, optionally, it may include a peripheral equipment, for example, a reader for reading the external memory, such as a non-volatile chip storage.

As for the firmware of the MMU-less device, in a lot of cases the software of the MMU-less device is considered to be firmware, which is a term for software that is stored on a hardware device in order to make it run properly. The term firmware is used especially often for MMU-less devices due to the low portability of their software. Still, the firmware includes the OS, and possibly some drivers, services, libraries, components, modules and applications, included in the OS, or not included in the OS; but it does not have to include optional user applications.

Herein, the OS is the program that, after being initially loaded into the device, manages all of the other applications in it. The applications make use of the OS and possibly some other components of the firmware by invoking the API, for example, requesting services through the API. A component such as, for example, a driver, a service or an application may be a part of the OS or not a part of the OS, depending on how it is built and how it interacts with the OS, other components, and the processing unit(s). Also, the software may include other components; and a component may be a part of the OS or not a part of the OS.

Components may include executable code and, optionally, data. Also, they may invoke other executable code, for example of the OS, a driver or a service, as well as access other data, for example, a file stored in a memory. A component may use commands not provided by the API; that is this term is broader than the application. Herein, the API may be the OS API, i.e. it may be the case that the API in whole is provided by the OS.

The MMU-less device might proceed to the execution of the received program, which was stored in an executable file, such as, for example, the ELF file, by performing the relocation on a respective sequence of executable and merely allocatable, non-executable, sections loaded into the memory, in particular example, the RAM. In particular, a relocating loader might be used for adjusting the addresses of program instructions and data so that they are correct for the memory location where the program is loaded. Such a loader component, which would later transfer control for the execution of the received program, may use respective relocation data sections and the symbol table section contained in the executable file (also called Relocation Data Sections and Symbol Table Section, Symtab, in the ELF format related literature). However, as the inventors of the present disclosure have considered, there may be certain effective restrictions for the size of the received program which may be executed by the MMU-less device. Firstly, if the program is to provide more functionality and usability and therefore to be bigger (i.e. a sequence of the executable and merely allocatable sections of the program is to occupy more memory), then there is a smaller chance that there would be a sufficient free space, for example, in the RAM, for this sequence: various parts of the RAM may already be used by other software. Secondly, the firmware of the MMU-less device would need to have more API entities to allow the program to be more usable while keeping its size limited; but then the API address table would occupy more space, more searches during the relocation would have to be done in this table, and also each search would be more time-consuming. Thirdly, it would be desirable to allow a software developer to use improved computer-implemented methods for preparing the firmware for the MMU-less device. Fourthly, it would be desirable to allow the same or another software developer to use a software development kit (SDK) for developing programs matching the firmware, for example, standalone or independent programs, and especially applications, for sending them to the MMU-less device running the firmware. That is, it would be desirable to allow a software developer, optionally the same, who develops the firmware, to use improved computer-implemented methods for preparing the SDK and/or other tools.

In view of the above, the inventors of the present disclosure have found that MMU-less device would be more usable if it is configured as in any of respective aspects or claims below. Also, the usability may be increased by the non-volatile chip storage, a system, methods, and a communication device as in any of respective aspects or claims below.

According to a first aspect, a device as in in claim 1 is provided. According to any further aspect, the subject matter as in respectively numbered claim is provided.

In other words, the foregoing and other aims may be achieved by the features of the independent aspects or claims. Further implementation forms are apparent from the dependent aspects or claims, the description and the figures.

In any case, the disclosure also provides for the following examples:
Example 1: A MMU-less device for receiving and executing a program comprising an invocation of an API of the MMU-less device, wherein the MMU-less device comprises an at least one processing unit, a RAM, and a built-in non-volatile memory storing API entities, wherein:
the built-in non-volatile memory stores an API table of sorted API name hashes and addresses, comprising a sorted plurality of hash values, calculated based on a plurality of names of API entities and paired with a plurality of addresses of the API entities.

### Or, in a variation:

Example 1: A MMU-less device for receiving and executing a program comprising an invocation of an application program interface (API) of the MMU-less device, wherein the MMU-less device comprises an at least one processing unit, a RAM, a built-in non-volatile memory storing API entities, and at least two or three antennas, each for receiving and/or transmitting signals at at least its respective associated frequency, wherein:
the built-in non-volatile memory stores an API table of sorted API name hashes and addresses, comprising a sorted plurality of hash values, calculated based on a plurality of names of API entities and paired with a plurality of addresses of the API entities.

In a further variation of Example 1, the MMU-less device may be so adapted that the API entities would comprise among them a first API entity for transmitting a signal using at least a first antenna from said antennas and/or for receiving a signal using the at least first antenna from said antennas; optionally comprise among them a second API entity for transmitting a signal using at least a second antenna from said antennas and/or for receiving a signal using the at least second antenna from said antennas, and optionally comprise among them a third API entity for transmitting a signal using at least a third antenna from said antennas and/or for receiving a signal using the at least third antenna from said antennas.

In yet a further, independent, variation of Example 1, the MMU-less device may be so adapted that it would include a feature that a certain antenna from the at least two or three antennas is operable in a Sub-GHz range, or near-field communication, NFC, range, or a LF RFID range; another antenna from the at least two or three antennas is operable in a range being the Sub-GHz range, or the NFC range, or the LF RFID range and different from the range of the certain antenna; and, optionally, yet another antenna is operable in a range being the Sub-GHz range, or the NFC range, or the LF RFID range and different from the range of the certain antenna and said another antenna.

Example 2: The MMU-less device of any of preceding Example(s) (i.e. in any Example, e.g. in any variation of any Example), wherein the API table comprises at least 500, or 1000, or 2000 hash values.

Example 3: The MMU-less device of any of preceding Examples, wherein the built-in non-volatile memory or the RAM stores a loader component for loading an at least one executable section from an executable file, comprising the program, into the RAM.

Example 4: The MMU-less device of Example 1 or 2, wherein the built-in non-volatile memory is rewritable, and the built-in non-volatile memory or the RAM stores a loader component for loading an at least one executable section from an executable file, comprising the program.

Example 5: The MMU-less device of Example 3 or 4, wherein the loader component is configured to determine a relocation value for an at least one bit, corresponding to said invocation, in a section comprising the invocation, which is (a) the at least one executable section or (b) another allocatable section loaded into the RAM or the built-in non-volatile memory from the executable file.

Example 6: The MMU-less device of Example 5, wherein the loader component is configured to determine the relocation value by searching for an address in the API table, wherein the search is based on a hash value of a name of an API entity.

Example 7: The MMU-less device of Example 6, wherein the loader component is configured to obtain the hash value for the name of the API entity by calculating the hash value.

Example 8: The MMU-less device of Example 6 or 7, wherein the loader component is configured, for obtaining the hash value, to obtain the name of the API entity from a string table section in the executable file.

Example 9: The MMU-less device of Example 8, wherein the loader component is configured to obtain the name of the API entity from the string table section without creating a copy of this section in at least one of the RAM and/or the built-in non-volatile memory; and optionally by sending out a request to fetch this name, where the request specifies a location of this name in the string table section.

Example 10: The MMU-less device of any of Examples 6 to 9, wherein the loader component is configured to obtain the name of the API entity based on a name index of the API entity, upon obtaining this name index from a symbol table section from the executable file.

Example 11: The MMU-less device of Example 10, wherein the loader component is configured to obtain said name index from that entry in the symbol table section whose entry index is recorded in that relocation data section in the executable file, which corresponds to the section comprising the invocation.

Example 12: The MMU-less device of Example 11, wherein the loader component is configured to obtain the entry index from a relocation entry corresponding to the at least one bit in said relocation data section.

Example 13: The MMU-less device of Example 11 or 12, wherein said relocation entry further comprises an offset of the at least one bit in the section comprising the invocation.

Example 14: The MMU-less device of any one of Examples 11 to 13, wherein said relocation entry further comprises a type of the relocation.

Example 15: The MMU-less device of any one of Examples 11 to 14, wherein the loader component is configured to determine the relocation value after checking that the entry in the symbol table section comprises a section header index of a zero value or of a different value not corresponding to any section from the executable file, or does not comprise any section header index.

Example 16: The MMU-less device of any one of Examples 3 to 15, wherein the loader component is configured to modify the at least one bit of the section comprising the invocation based on the determined relocation value.

Example 17: The MMU-less device of any one of Examples 3 to 16, wherein the loader component is configured to load a plurality of allocatable sections from the executable file into available blocks in the RAM, to record in the RAM a table of correspondence between the allocatable sections of said plurality and addresses at which the allocatable sections are loaded, and to perform at least one relocation for an invocation from one of the allocatable sections of said plurality to the same or another of the allocatable sections of said plurality based on said table of correspondence.

Example 18: A MMU-less device comprising an at least one processing unit, a RAM, and a built-in non-volatile memory of the MMU-less device, wherein
the built-in non-volatile memory or the RAM stores a loader component to load a plurality of allocatable sections from the executable file into available blocks in the RAM, to record into the RAM a table of correspondence between the allocatable sections of said plurality and addresses at which the allocatable sections are loaded, and to perform at least one relocation for an invocation from a one of the allocatable sections of said plurality to the same or another of the allocatable sections of said plurality based on said table of correspondence.

### Or, in a variation:

Example 18: A MMU-less device comprising an at least one processing unit, a RAM, a built-in non-volatile memory of the MMU-less device, and at least two antennas, each for receiving and/or transmitting signals at at least its respective associated frequency, wherein
the built-in non-volatile memory or the RAM stores a loader component to load a plurality of allocatable sections from the executable file into available blocks in the RAM, to record into the RAM a table of correspondence between the allocatable sections of said plurality and addresses at which the allocatable sections are loaded, and to perform at least one relocation for an invocation from a one of the allocatable sections of said plurality to the same or another of the allocatable sections of said plurality based on said table of correspondence.

In a further variation of Example 18, the MMU-less device may be so adapted that a certain antenna from the at least two or three antennas is operable in a Sub-GHz range, or near-field communication, NFC, range, or a LF RFID range; another antenna from the at least two or three antennas is operable in a range being the Sub-GHz range, or the NFC range, or the LF RFID range and different from the range of the certain antenna; and, optionally, yet another antenna is operable in a range being the Sub-GHz range, or the NFC range, or the LF RFID range and different from the range of the certain antenna and said another antenna.

In yet a further, independent, variation of Example 18, the MMU-less device may be so adapted that at least one of the allocatable sections comprises an invocation of an API entity for transmitting a signal using at least one antenna from said antennas and/or for receiving a signal using the at least one antenna from said antennas.Example 19: The MMU-less device of Example 17 or 18, wherein the loader component is configured to load at least one allocatable section thereby occupying a first available byte in the RAM and an at least one allocatable section thereby occupying a second available byte in the RAM, wherein the loader component avoids writing into a byte in the RAM between the first and the second available bytes, wherein optionally this byte is allocated to a program different from the received program.

Example 20: The MMU-less device of any one of Examples 17 to 19, wherein the loader component is configured to perform said at least one relocation based on a symbol table section from the executable file.

Example 21: The MMU-less device of Example 20, wherein the loader component is configured to perform said at least one relocation based on a section header index and a value associated symbol in that entry in the symbol table section whose entry index is recorded in a relocation data section located in the executable file and corresponding to said one of the allocatable sections.

Example 22: The MMU-less device of any one of Examples 3 to 21, wherein the executable file is an ELF compatible file.

Example 23: The MMU-less device of any one of Examples 3 to 22, wherein the executable file is partially-linked.

Example 24: The MMU-less device of any of preceding Examples, wherein
(k): the MMU-less device comprises an at least one user interface input and/or at least one output unit; and/or
(l): the MMU-less device is a handheld or mobile device; and/or
(m): the MMU-less device comprises at least two, three, four or five antennas for acting, via at least one wireless transceiver, at respectively at least two, three, four or five frequencies, and/or
(n): the MMU-less device comprises a MMU-less microcontroller comprising two processing units, wherein one of them is a central processing unit and the other is a dedicated processing unit for processing radio stack data; and/or
(o): the built-in non-volatile memory comprises memory of at least one of EEPROM and flash type, and/or
(p): a total volume of the built-in non-volatile memory of the MMU-less device does not exceed 8 MB, 4 MB, or 2 MB, or 1 MB; and/or
(q): a total volume of the RAM of the MMU-less device does not exceed 1 MB; and/or
(r): the MMU-less device lacks at least a hardware MMU; and/or
(s): the API entities are of a firmware or an operating system of the MMU-less device; and/or
(t): the MMU-less device is configured for receiving the program from an external storage being a communication device or an external memory, which optionally may be a non-volatile memory, which optionally may be a non-volatile chip storage.

Example 25: A non-volatile chip storage for use as an external memory of a MMU-less device of any one of preceding Examples, wherein:
the non-volatile chip storage stores an executable file storing a program for the MMU-less device and comprising at least one allocatable section, which comprises at least one bit recorded as requiring a relocation,
the executable file comprises a symbol table section,
an entry in the symbol table section corresponding to the at least one bit comprises a section header index of a zero value or of a different value not corresponding to any section from the executable file, or does not comprise any section header index; and
the entry comprises a name index of an API entity of an operating system for the MMU-less device.

Example 26: The non-volatile chip storage of Example 25, wherein the executable file comprises a string table section, which comprises a name of the API entity associated with the name index.

Example 27: The non-volatile chip storage of any one of Examples 25 or 26, wherein the executable file is an ELF file.

Example 28: The non-volatile chip storage of any one of Examples 25 to 27, wherein the executable file is partially linked.

Example 29: A system comprising the MMU-less device of any of Examples 1 to 24 and the non-volatile chip storage of any of Examples 25 to 28, wherein the MMU-less device is configured to communicate with non-volatile chip storage.

Example 30: A method comprising sending an API table from a communication device to a memory management unit-less (MMU-less) device comprising an at least one processing unit, a RAM, and a built-in non-volatile memory storing API entities,
wherein the API table comprises a sorted plurality of hash values, calculated based on a plurality of names of API entities and paired with a plurality of addresses of API entities.

Example 31: The method of Example 30, wherein the API table sent to the MMU-less device from the communication device is comprised in a firmware for the MMU-less device which is sent to the MMU-less device from the communication device.

Example 32: A method comprising sending from a communication device to a memory management unit-less (MMU-less) device or recording into a non-volatile chip storage an executable file storing a program for the MMU-less device and comprising at least one allocatable section, which comprises at least one bit recorded as requiring a relocation, wherein
the executable file comprises a symbol table section,
an entry in the symbol table section corresponding to the at least one bit comprises a section header index of a zero value or of a different value not corresponding to any section from the executable file, or does not comprise any section header index; and
the entry comprises a name index of an API entity of an operating system for the MMU-less device.

### Or, in a variation:

Example 32: A method comprising sending from a communication device to a MMU-less device comprising at least two or three antennas, each for receiving and/or transmitting signals at at least its respective associated frequency, or recording into a non-volatile chip storage an executable file storing a program for the MMU-less device and comprising at least one allocatable section, which comprises at least one bit recorded as requiring a relocation, wherein
the executable file comprises a symbol table section,
an entry in the symbol table section corresponding to the at least one bit comprises a section header index of a zero value or of a different value not corresponding to any section from the executable file, or does not comprise any section header index; and
the entry comprises a name index of an API entity of an operating system for the MMU-less device.

In a further variation of Example 32, the API entity may be for transmitting a signal using at least one antenna from said antennas and/or for receiving a signal using the at least one antenna from said antennas.

Example 33: The method of claim 32, wherein the executable file comprises a string table section, which comprises a name of the API entity associated with the name index.

Example 34: The method of claim 32 or 33, wherein the executable file is an ELF file.

Example 35: The method of any one of claims 32 to 34, wherein the executable file is partially linked.

Example 36: A communication device, configured to perform the method of any of claims 30 to 34.

Example 37: A computer-implemented method for use in preparing an at least one of (a) a firmware with an application program interface (API) comprising a plurality of API entities for an MMU-less device, and (b) a software development kit (SDK) for preparing a software, comprising an at least invocation of the API, for the MMU-less device, the method comprising:
generating from a firmware source code comprising a plurality of header files, composed of a plurality of top-level header files and a plurality of nested header files and comprising declarations of a plurality of entities for including into the plurality of API entities, an amalgamated header file, composed of each top-level header file from the plurality of header files.

Example 38: The method of the preceding claim, comprising searching in the firmware source code for the plurality of top-level header files for said generation, wherein said searching comprises reading names and file paths of the plurality of top-level header files, from one or more component manifest file.

Example 39: The method of claim 37 or 38, comprising generating a preprocessed amalgamated header file by invoking an at least one program from (a) a standalone preprocessor; (b) a preprocessor of a compiler, wherein the preprocessor is separately invokable; and (c) a compiler.

Example 40: The method of the preceding claim, comprising parsing the preprocessed amalgamated header file to generate a deep declaration table comprising a plurality of declarations from the proprocessed amalgamated header file.

Example 41: The method of the preceding claim, comprising storing API indicator data, which indicate for each declaration in the deep declaration table whether the declaration is for an API entity from the API or not for an API entity from the API; wherein, optionally, said storing comprises adding the API indicator data to the deep declaration table.

Example 42: The method of the preceding claim, comprising displaying at least a part of the deep declaration table on a screen, and collecting at least a part of the API indicator data from a human-computer interface for said storing the API indicator data.

Example 43: The method of claim 41 or 42, wherein the API indicator data indicates for at least one declaration present in the deep declaration table and in the plurality of header files that this at least one declaration is not for an API entity from the API; and/or the API indicator data indicates for at least one declaration present in the deep declaration table and not present in the plurality of header files that this at least one declaration is for an API entity from the API.

Example 44: The method of any one of claims 41 to 43, comprising including the deep declaration table along with, and optionally containing the API indicator data, into the SDK.

Example 45: The method of any one of claims 41 to 44, comprising generating an API version indicator for the API, wherein the API version indicator indicates whether the API is incompatible with at least one previous API by a difference with respect to a previous API version indicator,
wherein said generating the API version indicator comprises comparing the declarations of the API entities in the deep declaration table with previous declarations of previous API entities in a previous deep declaration table, and finding the lack of the compatibility if at least one of the previous API entities is not presented or is incompatibly presented among the API entities.

Example 46: The method of the preceding claim, comprising including the version indicator into the SDK, optionally by recording it into the deep declaration table.

Example 47: The method of any one of claims 39 to 46, comprising generating a dependency file by said invoking the at least one program to store the dependency file after an end of the preprocessing and, optionally, after exiting the program,
wherein the dependency file stores a name and file path of a single copy of each file from the plurality of header files.

Example 48: The method of the preceding claim, comprising copying, based on the dependency file, the plurality of header files from the firmware source code, to include the single copy of each of the plurality of header files in the SDK, optionally with an exception of one or more header file, from the plurality of the header files, for which one or more header file the API indicator data indicates that it is not in the API.

Example 49: The method of the preceding claim, comprising placing the plurality of header files into a directory structure in the SDK replicating a corresponding directory structure in the firmware source code, optionally taking into account said exception.

Example 50: The method of any one of claims 41 to 49, wherein a header file from the firmware source code declares a hash function with an argument being a string, wherein optionally this hash-function-declaring header file does not belong to said plurality of the header files.

Example 51: The method of claim 50 comprising generating, based on the deep declaration table along with and optionally including the API indicator data, and based on the firmware source code, a compilable file, optionally being an implementation file or a header file, wherein the compilable file comprises an array of structures, wherein each structure comprises:
an invocation of the hash function with an argument being a name of an API entity, and
a reference to an address of the API entity,

wherein the compilable file comprises an invocation of a sorting procedure for the array of the structures according to the hash values calculated by invocations of the hash function, and
the invocations of the hash function and the sorting procedure are executable by said at least one program.

Example 52: The method of claim 50 comprising generating, based on the deep declaration table along with and optionally including the API indicator data, and based on the firmware source code, a compilable file, optionally being an implementation file or a header file, wherein the compilable file comprises an array of structures, wherein each structure comprises:
a hash value calculated by applying the hash function to a name of an API entity, and
a reference to an address of the API entity,
wherein the array is sorted according to the hash values in the structures.

Example 53: A computer-readable memory storage for use in preparing, for an MMU-less device, a firmware comprising an application program interface (API) comprising a plurality of API entities, wherein:
the memory storage stores a compilable file, optionally being an implementation file or a header file, wherein the compilable file comprises an array of structures, wherein each structure comprises:
   an invocation of a hash function with an argument being a string presenting a name of an API entity, and
   a reference to an address of the API entity,
wherein the compilable file comprises an invocation of a sorting procedure for the array of the structures according to the hash values calculated by invocations of the hash function, and
the invocations of the hash function and the sorting procedure are executable by an at least one from a standalone preprocessor, a preprocessor of a compiler, and a compiler.

Example 54: A computer-readable memory storage for use in preparing, for an MMU-less device, a firmware comprising an application program interface (API) comprising a plurality of API entities, wherein:
the memory storage stores a compilable file, optionally being an implementation file or a header file, wherein the compilable file comprises an array of structures, wherein each structure comprises:
   a hash value calculated by applying a hash function to a string presenting a name of an API entity, and
   a reference to an address of the API entity,
wherein the array is sorted according to the hash values in the structures.

Example 55: The memory storage of claim 53 or 54, wherein each reference is a code of a command of obtaining an address applied to the respective API entity referred to by its name.

Example 56: The computer-readable memory storage any one of claims 53 to 55, comprising an implementation of the hash function for including the hash function into a loader component of the firmware.

Example 57: The computer-readable memory storage of any one of claims 53 to 56, storing the compiler.

Example 58: The computer-readable memory storage of any one of claims 53 to 57, storing a linker configured, for preparing an executable file presenting the firmware, to replace the references to the addresses with addresses configured for a memory of the MMU-less device.

In the present disclosure, the expression "and/or" means either or both of two possibilities.

### BRIEF DESCRIPTION OF THE DRAWINGS

For a more complete understanding of the present disclosure, and the advantages thereof, reference is now made to the following descriptions taken in conjunction with the accompanying drawings, in which:
Figures 1A and 1B show examples of schematic diagrams of variations of a MMU-less device in accordance with the present disclosure.
Figure 2 schematically shows another example of an MMU-less device, using a loader component in accordance with the present disclosure.
Figure 3 schematically shows an example of an executable file which may be received by the MMU-less device according to the present disclosure.
Figures 4A-4C schematically show an example of how MMU-less device can process the executable file to perform relocations according to the present disclosure.
Figure 5 shows a further example of a MMU-less device in accordance with the present disclosure.
Figs. 6 and 7 relate to methods of distributing an API table, a firmware, and executable file for an MMU-less device, according to the present disclosure.
Figure 8 schematically shows a method for use in preparing an at least one of (a) the firmware with the API, and (b) the SDK, according to the present disclosure.
Figures 9A and 9B schematically show variations of a computer-readable memory storage according to the present disclosure.
Fig. 10 schematically shows a further example of a MMU-less device in accordance with the present disclosure.
Fig. 11 schematically shows another example of a MMU-less device in accordance with the present disclosure.
Fig. 12 schematically shows yet another example of a MMU-less device in accordance with the present disclosure.

### DETAILED DESCRIPTION

Example embodiments are described below in more detail, but it is important to understand that embodiments can be provided in many alternate forms and should not be construed as limited to the examples set forth herein.

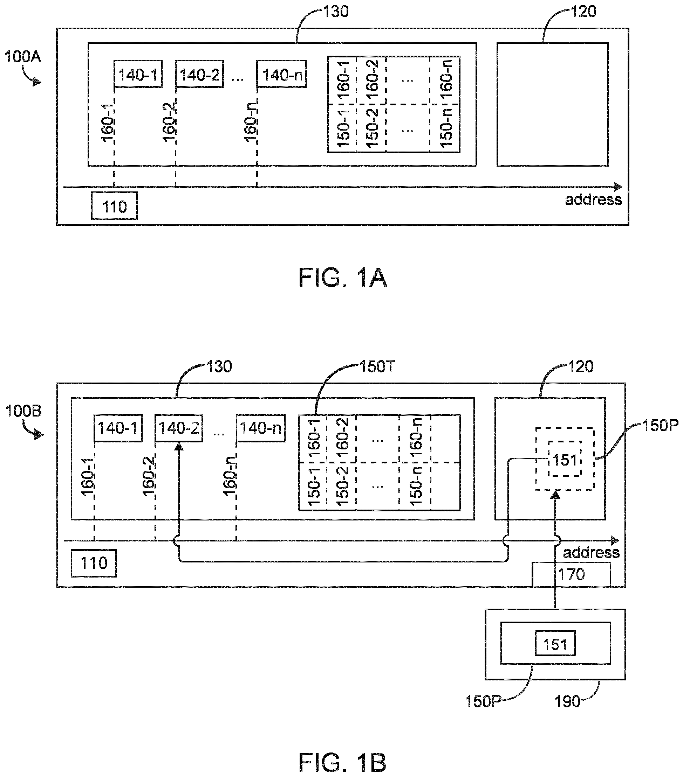

Fig. 1A shows a schematic diagram of a MMU-less device 100A, which is configured in agreement with the requirements and, optionally, any combination of other, optional, features mentioned above. The MMU-less device 100A includes an at least one processing unit 110, a RAM 120, and a built-in non-volatile memory 130 storing a plurality of API entities 140-1, 140-2, ..., 140-n of the MMU-less device 100A. The MMU-less device 100 is configured for receiving a program, which includes an invocation of an API of the MMU-less device 100, for example, of one or more of the API entities 140-1, 140-2, ..., 140-n: 140-2. For increasing the usability of the MMU-less device 100, the built-in non-volatile memory 130 stores an API table 150T including a sorted plurality of hash values 150-1, 150-2, ..., 150-n, calculated based on a plurality of names of API entities 140-1, 140-2, ..., 140-n and paired with a plurality of addresses 160-1, 160-2, ..., 160-n of the API entities 140-1, 140-2, ..., 140-n in the built-in non-volatile memory 130.

For example, the API entities 140-1, 140-2, ..., 140-n may include a function called "malloc" or some data called "_global_impure_ptr". In general, the API entities 140-1, 140-2, ..., 140-n may include at least one API function or at least one API object being not an API function. Hash values 150-1, 150-2, ..., 150-n may be placed in the hash table 150T, for example, in an increasing order. Alternatively, a decreasing order may be applied instead.

For example, the API table may look like:

**TABLE 1**

| Hash of a name of an API entity | Address of this API entity |
|---|---|
| 0x0549bd0a | 0x080012f0 |
| 0x0d39ad3d | 0x08005320 |
| 0x0f11ed7d | 0x080054e4 |
| ... | ... |
| 0x7c96f087 | 0x080001e8 |
| 0x9f8ba228 | 0x0800668c |

Fig. 1B shows a schematic diagram of a MMU-less device 100B, a variation of the MMU-less device 100A. Similar parts of the MMU-less devices 100A and 100B have the same reference numerals. The MMU-less device 100B is configured for receiving a program 150P, which includes an invocation 151 of API entity 140-2 in this example. Since the MMU-less device 100B is configured for receiving a program, it includes an interface for receiving it. In Fig. 1B the MMU-less device 100B receives the program 150P from an external communication device or external memory 190. In contrast to Fig. 1A, the interface of the MMU-less device 100B for receiving the program 150P is shown explicitly, at 170, in Fig. 1B. The MMU-less device 100B can execute the program 150P when it is loaded into the RAM 120 as it is meant by indications in Fig. 1B.

On the one hand, such configurations of the MMU-less device as above lead to the need to calculate one or more hash values during the relocation. On the other hand, in the configuration as 100A or 100B the MMU-less device does not need to store an API address table, i.e. the table of correspondence between the names of the API entities 140-1, 140-2, ..., 140-n (in their explicit, string forms) and addresses 160-1, 160-2, ..., 160-n of the API entities 140-1, 140-2, ..., 140-n. That is, in the MMU-less device 100A or 100B, the RAM 120 and the built-in non-volatile memory 130 may not store any one or more names of the API entities 140-1, 140-2, ..., 140-n in the string form. As the inventors of the present disclosure have assessed, such configurations of the MMU-less device allow to decrease the size of the table containing the API addresses 160-1, 160-2, ..., 160-n for the same number of API entities, because names of the API entities, as strings of different lengths, in average occupy more space that it is expected from their hash values. For example, the hash value may consist, for example, of 2, 3 or 4 bytes, i.e. of a smaller number of bytes than the longest API entity name.

The configurations as above allow speeding up the search by making smaller and/or more predictable jumps, and consequently quicker finding the needed API entities' addresses stored in the non-volatile memory 130. That is, the search may be performed quicker in the API table than in the API address table, due to the equal length of the hash values. Consequently, according to the present disclosure, the MMU-less device in the configurations 100A and 100B is pre-configured for allowing the improvement in the speed of the search to overcompensate for the introduction of the delay used to calculate the hash value for starting the search.

The above effect is more pronounced with the growth of the number of the API entities. For example, the time complexity of finding a single value in an unsorted array is proportional to the size of this array, that is, O(N), where N is the size of the array. In contrast, the search in the API table as presented in this disclosure may be approximated as a logarithmic time of its size, O(log N), or bounded by such time: the address of any API entity may be found using a binary search, thanks to the sorting of the hash values in this API table. That is, it is possible to calculate the hash value and then compare it to the value in the middle of the table; if the hash value being looked up is greater, the process is repeated using new range, from the middle of the table to its end. Otherwise, it is repeated on the lower part of the table, until a match has been found or the search is exhausted. Hence, according to the present disclosure, the API table 150T may include 200 or more, 500 or more, or 1000 or more, or 2000 or more hash values (and the corresponding number of addresses). If, for example, 32 bits are allocated for storing each hash value, then the overall number of hash values may be up to 2³².

In special cases, for example, when the API table is structured more rigidly, the search may require even less time. For example, if the API table presents a hash table, then the search would require approximately a constant time. According to the present disclosure, the API table may be a hash table, and is such in some embodiments. However, the API table is not required to be a hash table, and is unlikely to present a hash table, unless an accordingly selected hash function is used to obtain hash values presenting a sequence of indexes differing by one (e.g. 0, 1, 2, 3, ..., (n-1), but not 0, 2, ... , k+(n-1), where k is a natural number, or not like in Table 1 above). The embodiments or variations, where the API table is not a hash table, allow for simpler generating and updating the API table, as well as higher reliability during invocations by avoidance of hash buckets.

The above also means that more addresses may be stored in the API table 150T than in a conventional API address table if they were allowed to occupy the same size in the memory. Also, the effect of saving time and memory is more pronounced with the increase in the number of the API entities: the increase of lookup time scales much slower than the table size.

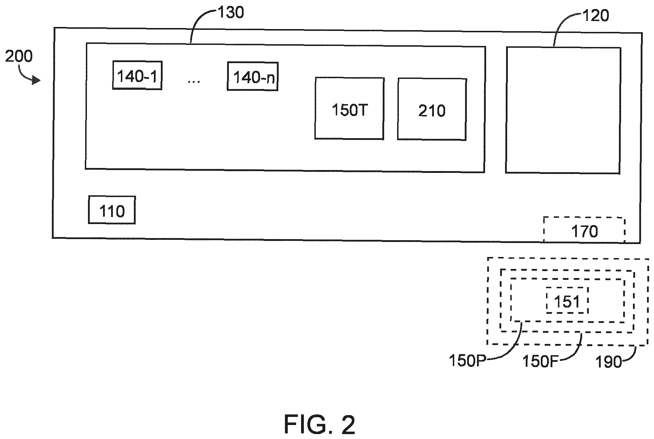

Fig. 2 shows a schematic diagram of a MMU-less device 200, which differs from the MMU-less device 100A or 100B in that it has an installed (or loaded) loader component (relocating loader) 210, so that the built-in non-volatile memory 130 (as shown in Fig. 2) and/or RAM 120 stores it. The loader component 210 is configured to load an at least one executable section from an executable file 150F into the RAM 120 upon the MMU-less device 200 receiving the program 150P. The executable file 150F, accessible from the communication device or external memory 190, includes the program 150P. While the executable section is a part of the program 150P, the file 150F includes headers and not executable sections, based on which the loader component 210 may perform the relocation for the one or more executable sections, as well as for any other allocatable section, if present.

In a variation, the loader component 210, as mentioned, may be recorded, i.e. loaded, in the RAM 120, for example, from the built-in non-volatile memory 130, for quicker performing the relocating loading if the amount of free space in the RAM 120 allows this. Alternatively, or additionally to loading the at least one executable section into the RAM 120, the built-in non-volatile memory 130 of the MMU-less device 200 (and 100A, and 100B) may be rewritable, and the loader component, located in it or the RAM 120, may be configured to load an at least one executable section from the executable file 150F into such rewritable built-in non-volatile memory 130.

Any of the executable sections mentioned above may be the one which includes the invocation 151. Alternatively, the invocation 151 may belong rather to another allocatable (also called allocable), but not executable section of the program 150P.

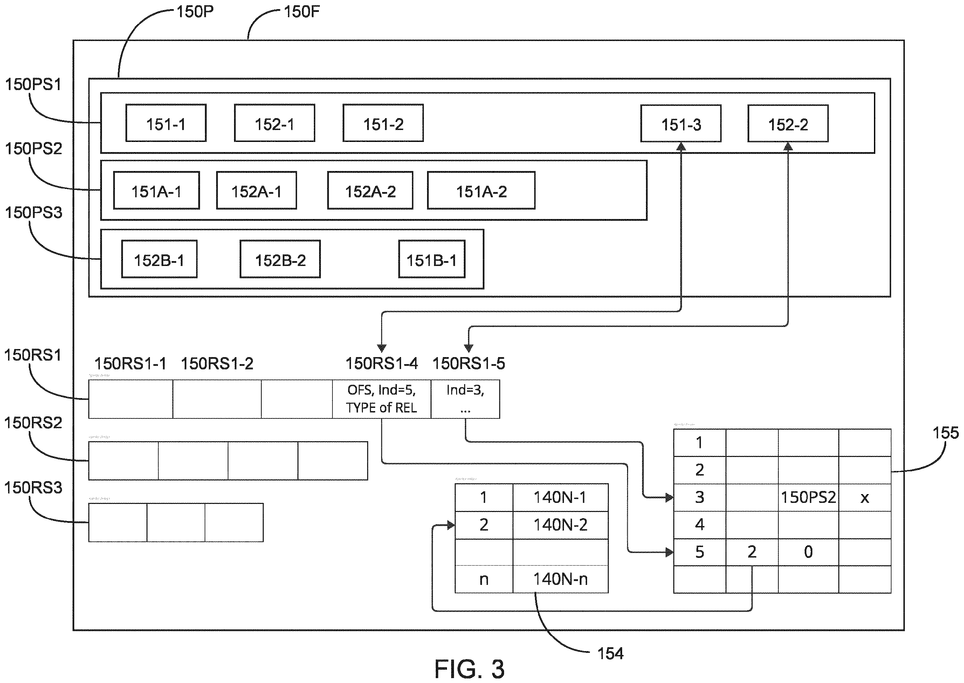

Fig. 3 schematically shows a different, detailed, example of the executable file 150F including a program 150P understood to include a set of allocatable sections 150PS1, 150PS2 and 150PS3, from which the sections 150PS1 and 150PS3 are executable and the section 150PS2 is not executable. The executable section 150PS1 includes invocations 151-1, 152-1, 151-2, 151-3 and 152-2 in this order with an increasing offset from the start of the section 150PS1. Invocations 151-1, 151-2 and 151-3 are for API entities, and invocations 152-1 and 152-2 are for code or data in the same allocatable section or other allocatable sections, 150PS1-150PS3. The allocatable, non-executable section 150PS2 includes invocations 151A-1, 152A-1, 152A-2, 151-A2: those, which start with 151, for API entities; and those, which start with 152 for code or data in the same or other allocatable sections, 150PS1-150PS3. Similarly, the executable section 150PS3 includes invocations 152B-1, 152B-2 and 151B-1, with an increasing offset from the start of the section.

In the examples of the MMU-less device, having the loader component 210 installed, this component may determine a relocation value for an at least one bit in the executable or merely allocatable section loaded into the RAM 120 (again, loading into the RAM is used as an example because it may allow for a smaller delay during loading and relocation and higher speed during execution of the program than loading into the built-in non-volatile memory 130. The loading into the RAM would be applicable to more use cases; however, the present disclosure is applicable also in the case when the built-in non-volatile memory 130 is rewritable, and the program or its at least one allocatable section is loaded into it).

Herein, the at least one bit may correspond to any of the invocations starting with 151 in Fig. 3, in the executable sections 150PS1 and 150PS3 or merely allocatable section 150PS2. By the relocation value is meant a new address which is to replace the original address recorded in the executable or merely allocatable section before relocation, or which is to be inserted there to replace an address missing from this section before relocation. Alternatively, or additionally, the relocation value may replace a record indicating that the relocation is required. That is, the at least bit may have some value or no value before the relocation, but in any case it corresponds to a position or a location at which the relocation is to be performed in the respective allocatable and possibly executable section, and it has to acquire the relocation value, being an address of an API entity, after the relocation. For example, for the MMU-less device 100A or 100B the relocation value for any of the invocations starting with 151 has to be equal to one of the addresses 160-1, ... 160-n, depending on which API entity is to be invoked.

In particular, the loader component 210 may determine the relocation value by searching for an address in the API table 150T, with the search based on a hash value of a name of an API entity which is to be invoked by the invocation. That is, the loader component 210 may find in the executable file 150F that the invocation is for some API entity, for example 140-2, because the executable file 150F includes a record with the corresponding API entity name. Then, the loader component 210 finds the address 160-2 in the API table 150T.

In this example, the loader component 210 may obtain the hash value 150-2 for the name of the API entity 140-2, found from the executable file 150F, by calculating this hash value. The same hash function is to be used, with which the table 150T has been built.

As for the name of the API-entity 140-2 for that invocation which is subject to the relocation, the loader component 210 may obtain this name from a string table section in the executable file 150F. For example, in the ELF format such section is also called String Table Section. Fig. 3 includes a string table section 154 with indexes 1, 2, ... n and names 140N-1, 140N-2, ... 140N-n for API entities 140-1, 140-2, ... 140-n to provide an example.

The loader component 210 may obtain the name of the API entity from the string table section 154 without creating a copy of this section in at least one of the RAM 120 and/or the built-in non-volatile memory 130 of the MMU-less device. For example, the loader component 210 may send out a request to fetch the name 140N-2 from the external memory or communication device 190. The request may specify a location, such as specified by an index (in this example, of value 2), of this API entity name 140N-2 in the string table section 154. For example, the request may be directed to a reader device of the external memory 190, which may present, for example, a non-volatile medium carrier or a non-volatile chip storage.

The loader component 210 may, for obtaining the name 140N-2 of the API entity 140-2, for example, from the string table section 154 and based on the API entity name index (in this example, of value 2) indicating the location of this name 140N-2 in the string table section 154, obtain this name index (in this example, of value 2) from a symbol table section 155 from the executable file 150F and also shown in Fig. 3. For example, in the ELF format such section is also called Symbol Table Section. Thus, obtaining the name 140N-2 of API entity 140-2 may be based on the name index (in this example, of value 2) of the API entity 140-2, as found in the symbol table section 155, and used for querying the string table section 154.

For example, the loader component 210 may obtain the name index (in this example, of value 2) of the API entity 140-2 by accessing that entry in the symbol table section 155, whose entry index (in this example, of value 5) is recorded in a relocation data section 150RS1. Herein, the relocation data section 150RS1 in the executable file 150F is relevant because it corresponds to the allocatable section 150PS1 including the invocation 151-3, being subject to relocation; in other words, the relocation data section 150RS1 is relevant because it is recorded in the executable file 150F (in a header in this file) as relating to the allocatable section 150PS1. For example, in the ELF format such section is also called Relocation Data Section.

There may be a plurality of different relocation entries, such as 150RS1-1, 150RS1-2 ... 150RS-5, in the same relocation data section, such as 150RS1 . The loader component 210 may obtain the name index (in this example, of value 2) of the API entity 140-2 from that relocation entry (150RS1-4, the fourth in the section 150RS1), which relates to the invocation 151-3 (the fourth in the section 150PS1) being subject to the relocation, i.e. from the relocation entry which relates to the at least one bit, relating to the invocation as discussed above.

That is, the loader component 210 may obtain the entry index (in this example, of value 5), for querying the symbol table section 155 for the name index (in this example, of value 2), from the relocation entry 150RS1-4 corresponding, in the relocation data section 150RS1, to the invocation 151-3 subject to the relocation. Such relocation entry may be located in that relocation data section, which corresponds to the allocatable section.

This relocation entry 151RS1-4 may further include an offset OFS of the at least one bit at 151-3 in the allocatable section 150PS1. The loader component 210 may determine, which at least one bit is subject to relocation, based on this offset, by reading the relocation data section 150RS1 entry by entry.

Also, the relocation entry, such as 151RS1-4, may further include a type of the relocation. The loader component 210 may replace as many bits starting from or including the at least one bit (i.e. starting from the relocation address) as it is determined by the type of the relocation which the at least one bit has to undergo (i.e. which has to be performed at this relocation location).

The relocation value does not have to be found in the ways as described above in all cases: the above steps may be useful for the direct invocation of the API entity, which address is not resolved in the executable file 150F. In other cases, where the invocation directly relates to an entity (e.g. code or data) in the same or another allocatable section in the executable file 150F, a relocation may need to be performed as well, but such relocation does not have to be based on the table 150T. For example, the allocatable section 150PS1 as above, corresponds to the relocation data section 150RS. The invocation 152-2, fifth in the allocatable section 150PS1, thus corresponds to the relocation entry 151RS1-5, fifth in the relocation section 150RS. The relocation entry 151RS1-5 includes a record that entry index of value 3 is relevant in the symbol table section 155 to this invocation; and the respective entry (of index 3 in the left column in the symbol table section 155) includes in the third column a section header index of value 2, meaning that the invocation 152-2 is for a data in the allocatable section 150PS2. In contrast, the entry of index 5 in the symbol table section 155 includes in the third column a section header index of value 0, which is in the present example not assigned to any of the executable sections 150PS1-150PS3 of the program 150P and means that the invocation (151-3) is for an API entity.

That is, the loader component 210 may determine for an invocation the relocation value based on the API table after checking (i.e. ascertaining) that the respective entry in the symbol table section 155 includes a section header index of a zero value: for example, such value is typically used in the ELF for the case in which the invocation, which is subject to relocation, relates to an API entity rather than a different allocatable section in the executable file 150F. However, the zero value is not the only possibility, and the executable file 150F does not have to be in the ELF format; hence, alternatively the loader component 210 may be configured to proceed to determining the relocation value in the ways described above only after checking that the entry in the symbol table section includes a section header index of any value not corresponding to any allocatable section, such as 150PS1-150PS3 from the executable file 150F. For example, such value could be 7 since there is no the 7th allocatable section in the executable file 150F in Fig. 3. As a further alternative, the loader component 210 may proceed to determining the relocation value in the ways described above only after checking that the entry in the symbol table section does not include a section header index (as a value or as a field).

Furthermore, in the above example, the loader component 210 may be configured to perform, upon determining the relocation value. the relocation by modifying the at least one bit of the at least one executable section, such as any section from 150PS1-150PS3, loaded, for example, into the RAM 120, based on the determined relocation value.

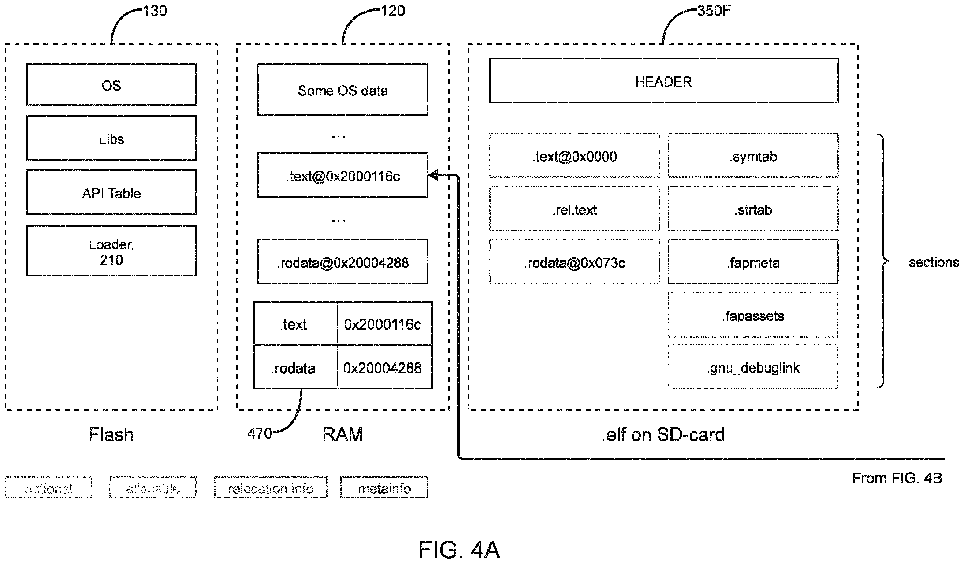

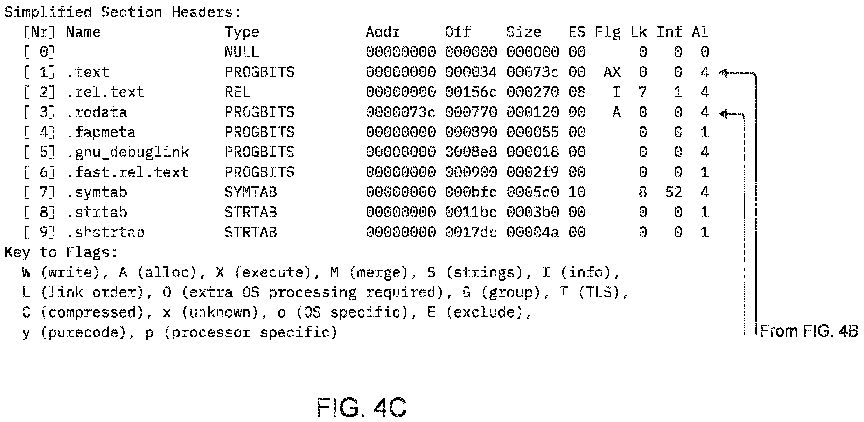

Figs. 4A-4C present an example illustrating how the loader component 210 may perform relocations. In Fig. 4A another exemplary implementation, 350F, of the executable file 150F is schematically shown. The executable file 350F is stored on the SD-card in the ELF format. It includes a header and various sections, including an executable (and allocatable) section "text" and an allocatable section ".rodata", which are recorded with offsets of 0x0000 and 0x073c, respectively (with respect to the start of the elf file). Such offsets may be used to query the SD-card reader for data from the respective sections, and may be used for other sections too: for example, in the request to fetch the API entity name from the string table section, with its respective offset. The loader component 210 is called "Loader" and is shown as recorded in the built-in non-volatile memory 130 implemented by the flash memory in Fig. 4A. Also, this flash memory has a record of the API table (shown as "API Table" in Fig. 4A). The loader component has read the header in Fig. 4A, detailed in Fig. 4C, and found which sections are executable and allocatable; then it has loaded such sections into the RAM, which, as shown in Fig. 4A, therefore similarly to the SD-card includes sections "text" and ".rodata". In particular, the copies of the sections "text" and ".rodata" have been loaded by the loader at addresses 0x2000116c and 0x20004288, respectively. These addresses belong to the RAM, in the address space of the MCU of the present example MMU-less device.

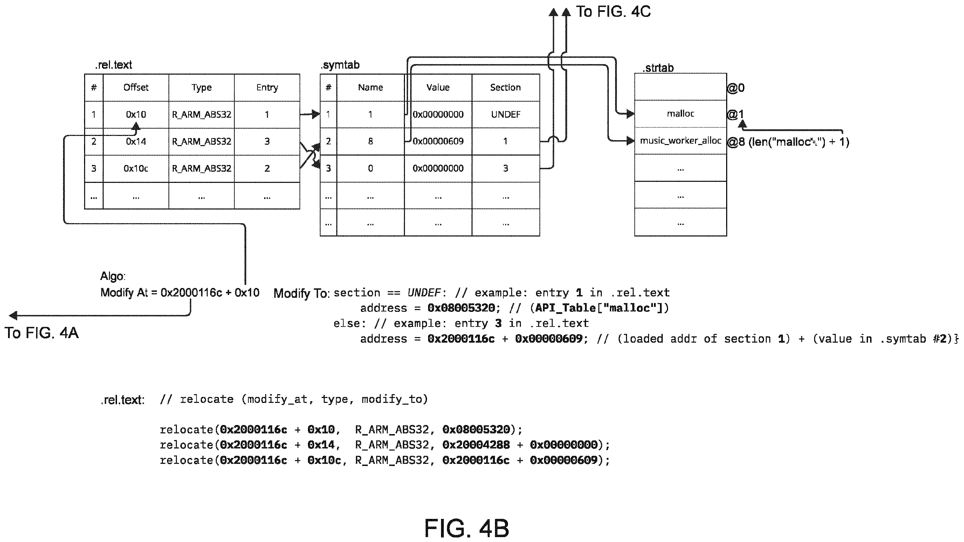

Fig. 4B schematically shows a Relocation Data Section ".rel.text" for the executable section ".text". While analysing this relocation data section, the loader finds from its relocation entry #1 that at least one bit with offset 0x10 is subject to relocation. Also, the loader finds from the relocation entry #1 that the entry index (in the fourth column) is 1 (by coincidence) for this at least bit, and then, based on this entry index, finds entry #1 in the Symbol Table Section (".symtab"), where the header row is added just for readability. There is no definition of a section header index in this entry: the column "Section" has a value "UNDEF" for the clarity of presentation, recorded as zero in the actual ELF file. Thus, a direct invocation of some API entity is presented by the at least one bit at the offset 0x10 mentioned above. Consequently, the loader finds from .symtab, entry #1, second column, that the corresponding index of the name of the API entity is 1 (by coincidence). The loader then finds the name of the API entity in the String Table Section (".strtab") in Fig. 4B: the name corresponding to index with value 1 is "malloc". The loader calculates the hash function of the "malloc" and finds from the API table 150 the address 0x08005320. Hence, this address is to be used as the relocation value and is mentioned after "if" in the example of "Modify to" in Fig. 4B.

In a further example, the loader component 210 may have another feature allowing the loaded programs to be bigger, and capable of bringing the usability of the MMU-less device at a new level when this feature is used in combination with the ways to perform relocations for the API entity invocations discussed above, or even when this feature is used separately. In particular, in the example shown in Fig. 4A, the loader component 210 has loaded a plurality of allocatable sections (.text and .rodata in Fig. 4A) from the executable file 350F into available blocks of the RAM 120 and has recorded in the RAM a table 470 of correspondence between these allocatable sections and their loading addresses 0x20001116c and 0x20004288. Further, the loader component 210 is configured to perform at least one relocation for an invocation from one section to the same or another section. For example, such invocations start with 152 in Fig. 3 or correspond to an offset of 0x14 and/or 0x10c in the section text. Herein, the invocation corresponding to the offset 0x14 is from the section text to the section text. The invocation corresponding to the offset 0x10c is from the section text to the section .rodata. The relocation may be performed based on the table of correspondence 470.

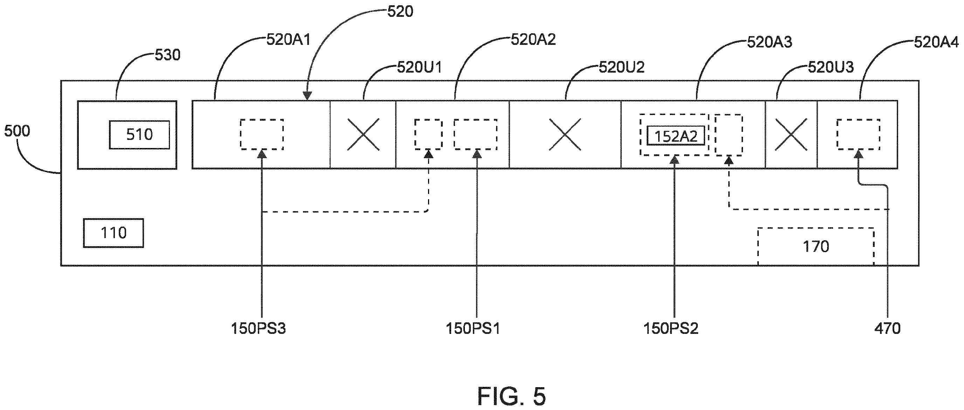

Referring to Fig. 5, there is schematically shown another example, of a MMU-less device 500, using the above approach with respect to invocations of one allocatable section to another allocatable section. The MMU-less device 500 includes a processing unit 110, a RAM 520, and a built-in non-volatile memory 530. In the shown example, the built-in non-volatile memory 530 stores a loader component 510. This component 510 is configured to load a plurality of allocatable sections 150PS1-150PS3 shown in Fig. 3 from the executable file 150F into available blocks 520A1-520A4 in the RAM 520. Also, it records into the RAM 520 a table 470 of correspondence between the allocatable sections 150PS1-150PS3 and addresses at which the allocatable sections are loaded. In other words. For example, the section 150PS1 fits only in the block 520A2 and is loaded there; and section 150PS2 is loaded then into block 520A3. The section 150PS3 may be loaded either into block 520A1 or 520A2; and the table of correspondence 470 may be recorded into either a block 520A3 or block 520A4. Additionally, the loader component 510 performs a relocation, for example, for the invocation 152A-2. The relocation is performed based on the table of correspondence 470. With such loading and relocation approach, the loading component 510 allows increasing the size of the programs and keeping the required RAM size lower.

As for the API invocations, such as starting with 151 in Fig. 3, the difference between the MMU-less device 500 and the MMU-less devices 100A, 100B and 200 above is in that the MMU-less device 500 may process the API invocations conventionally, for example in a case in which the API entity addresses are stored in a table along with the API entity names in the built-in non-volatile memory 530. However, the MMU-less device 500 may be also configured to perform relocations for the API invocations as presented above in the present disclosure, in particular, in the case of the API entity addresses being stored in the API table along with the respective (pre-)sorted hash values of API entity names in the built-in non-volatile memory 530.

Further, the loader component 520 may avoid loading the allocatable sections 150PS1-150PS3 and the table of correspondence 470 into unavailable blocks 520U1-520U3 in the RAM 520. In other words, the loader component 520 may load at least one allocatable section (e.g. 150PS2) thereby occupying some first available byte in the RAM 520 and load an at least one allocatable section (e.g. 150PS3) thereby occupying some second available byte in the RAM; but the loader component 510 avoids writing into some byte in the RAM 520 between the first and the second available bytes. For example, the latter byte may belong to the block 520U2 in the RAM if the section 150PS3 is loaded into block 520A2, or it may belong either to a block 520U1 or block 520U2 in the RAM if the section 150PS3 is loaded into block 520A1. This byte may be allocated to a program different from the received program 150P.

The loader component may perform the relocation for the invocation such as 152A-2 (mentioned above with reference to the example of Fig. 5) or the invocation at the offset of 0x14 and/or 0x10c in the section text based on the symbol table section, such as 155 in Fig. 3 or symtab in Fig. 4B, from the executable file.

For example, the loader component may perform the relocation by using a value associated symbol in that entry in the symbol table section whose entry index is recorded in the relocation data section corresponding to the allocatable section. For example, in Fig. 4B the third invocation in the section text is at the offset of 0x10c, as it is seen from the respective relocation data section .rel.text . The entry #3 in rel,text refers to entry #2 in .symtab. The entry #2 in symtab has a value associated symbol of 0x00000609 (determined by a compiler). The relocation value in "modify to" example in Fig. 4B is based on this value associated symbol, as well as the address of 0x2000116c of the section text taken from the table 470 in Fig. 4A. The address 0x2000116c of the section text is relevant for this relocation because the invocation is to the section text: the value of the section header index is 1 in the entry #2 in symtab, and according to the header in Fig. 4C this is an index of the section text.

Similarly, the loader component may perform the relocation for the invocation at the offset of 0x14 in the section text based on the symbol table section. However, in this case the value associated symbol is 0, and the invocation is from the section text, but to the section .rodata (the value of the section header index is 3 in the entry #3 in symtab, and according to the header in Fig. 4C this is an index of the section rodata). Hence, the relocation value is based on the address 0x2000428 of the section .rodata in the table 470 in Fig. 4A.

Similarly, the value-added symbol set to x in the symbol table 155 in Fig. 3 may be used by the loader component 510 in Fig. 5 for the invocation 152-2 in Fig. 3.

In the above examples, the executable file may be an ELF compatible file. Additionally, or alternatively, the executable file may be partially-linked.

In all above examples, the MMU-less device may have any of the features below, or any combination of these features:
(a) the MMU-less device may include an at least one user interface input and/or at least one output unit; and/or
(b) the MMU-less device may be a handheld or mobile device; and/or
(c) the MMU-less device may include at least two, three, four or five antennas for acting as a wireless transceiver at respectively at least two, three, four or five frequencies, and/or
(d) the MMU-less device may include a MMU-less microcontroller including two processing units, wherein one of them is the central processing unit (e.g. 110) and the other is a dedicated processing unit for processing radio stack data; and/or
(e) the built-in non-volatile memory may include memory of at least one of EEPROM and flash type, and/or
(f) a total volume of the built-in non-volatile memory of the MMU-less device may not exceed 8 MB, 4 MB, or 2 MB, or 1 MB; and/or
(g) a total volume of the RAM of the MMU-less device may not exceed 1 MB; and/or
(h) the MMU-less device may lack at least a hardware MMU; and/or
(i) the API entities may be of a firmware or an operating system of the MMU-less device; and/or
(j) the MMU-less device may be configured for receiving the program from an external storage being a communication device or an external memory, which optionally may be a non-volatile memory, which optionally may be a non-volatile chip storage.

With regard to the at least one user interface input and/or at least one output unit, the MMU-less device may have a screen 104 and/or another output module, and/or an output port. The screen may be, for example, a touch screen, presenting an input module for human-computer interaction. Additionally, or alternatively to the input module presented by the touch function of the touch screen, the MMU-less device may include one or more other input modules, such as a keyboard, mouse, and touchpad.

In view of the above, in another aspect the present disclosure provides a non-volatile chip storage for use as an external memory of a MMU-less device. An example of such storage may be provided by an SD-card 350 in Fig. 4A the source 190 of the executable file 150F in Figs. 1B, 2 and 3 implemented as the non-volatile chip storage. The non-volatile chip storage stores an executable file 150F to 250F storing a program 150P for the MMU-less device and including at least one allocatable section (such as sections text and .rodata in Fig. 4A and sections 160PS1-150PS3 in Fig.3). This at least one section includes at least one bit recorded as requiring a relocation. Furthermore, the executable file includes a symbol table section (such as symtab in Figs. 4A and 4B and symbol table section 155 in Fig, 3). Further, in the executable file, an entry in the symbol table section corresponding to the at least one bit includes a section header index of a zero value or of a different value not corresponding to any section from the executable file, or does not include any section header index. Additionally, this entry includes a name index of an API entity for the MMU-less device; for example, of an operating system for the MMU-less device.

Further, the executable file may include a string table section (such as strtab in Figs. 4A and 4B or 154 in Fig. 3), which includes a name of the API entity associated with the name index. The executable file may be an ELF compatible file or in other words an ELF file. The executable file, optionally being the ELF compatible file, may be partially linked.

In another aspect of the present disclosure, the MMU-less device in any variation according to the present disclosure and the non-volatile chip storage in any variation according to the present disclosure may be considered to form a system, upon the MMU-less device being configured to communicate with the non-volatile chip storage.

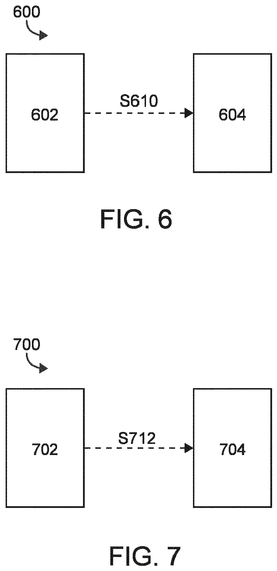

In yet another aspect of the present disclosure, there is provided a method which may be used, for example, by a software developer, or a vendor, or a distributor. The method is schematically illustrated in Fig. 6: it shows such a method 600 including a step S610 of sending an API table from a communication device 602 to a MMU-less device 604, which may or may not have another API table in its memory. The communication device may be for example a computer connected to the internet or another network, or a specialized device, for example, a server, or a cloud service, or a telecommunication node. In the step S610, the API table being sent includes a plurality of sorted hash values, calculated based on a plurality of names of API entities and paired with a plurality of addresses to be used by API entities, while the MMU-less device includes an at least one processing unit, a RAM, and a built-in non-volatile memory storing API entities. The API table may relate to some different API entities than the MMU-less device stores and is able to provide to independent programs before receiving the API table. That is, the API of the MMU-less device may be updated, and optionally expanded, by using the method 600; and addresses of API entities common between the two versions of API may be updated.

For example, in the method 600, the API sent to the MMU-less device from the communication device may be included in a firmware for the MMU-less device which is sent to the MMU-less device from the communication device. That is, the step S610 includes sending the rest of the firmware along with the API table.

In yet a further aspect of the present disclosure, there is provided a method which again may be used, for example, by a software developer, or vendor, or distributor, the same or different from the aspect immediately above. The method includes sending from a communication device to a MMU-less device or recording into a non-volatile chip storage an executable file storing a program for a MMU-less device and including at least one allocatable section, which includes at least one bit recorded as requiring a relocation. The method is schematically illustrated in Fig. 7, showing such a method 700 including such a sending or recording step S712. The executable file includes a symbol table section. An entry in the symbol table section corresponding to the at least one bit includes a section header index of a zero value or of a different value not corresponding to any section from the executable file, or does not comprise any section header index. Also, this entry includes a name index of an API entity of an operating system for the MMU-less device, at 704 in Fig. 7. Alternatively, 704 in Fig. 7 may relate to a non-volatile chip storage. The communication device, at 702 in Fig. 7, may be, for example, a computer connected to the internet or another network, or a specialized device, for example, a server, or a cloud service, or a telecommunication node, i.e. may be configured similarly to the communication device 602 or be the same device as the device 602.

In the above method 700, the executable file, being sent to the MMU-less device or recorded into the non-volatile chip storage, may include a string table section, which includes a name of the API entity associated with the name index. The executable file may be an ELF file, and/or the executable file may be partially linked.

In a different aspect, the present disclosure provides a computer-implemented method for use in preparing an at least one of (a) a firmware with an API including a plurality of API entities for an MMU-less device, and (b) an SDK for preparing a software, including an at least invocation of the API, for the MMU-less device. The inventors have designed such a method because they have sought to increase the number of API entities stored in an MMU-less device, and it is more convenient, reliable and quick to use their method for preparing the firmware with such an API and for preparing an SDK allowing various developers to develop programs for the firmware with such an API. Consequently, the computer-implemented method may be performed by a computer used by the software developer.

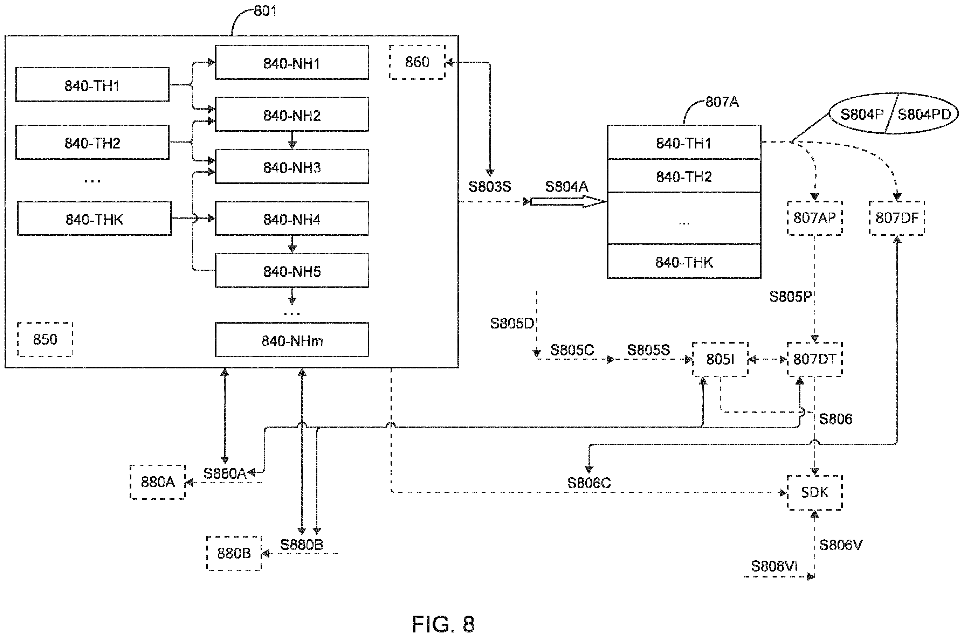

With reference to Fig. 8, it schematically shows such a method 800. The method includes a step S804A of generating from a firmware source code 801 an amalgamated header file 807A. The firmware source code includes a plurality of header files 840, composed of a plurality of top-level header files 840-TH1, 840-TH2, ..., 840-THk and a plurality of nested header files 840-NH1, 840-NH2, ..., 840-NHm. These header files 840 include declarations of a plurality of entities for including into the plurality of API entities. The amalgamated header file 807 is to be composed of each top-level header file 840-TH1, 840-TH2, ..., 840-THk from the plurality of header files 840. It may be composed without including any of the nested header files 840-NH1, 840-NH2, ..., 840-NHm. The source code further includes implementation files corresponding to the header files 840. Furthermore, the source code may include a different one or more header file 850, which declarations are not intended to be included in the SDK. The source code files may be located in one, single, directory or folder, or they may be distributed between one or more directory tree. The source code may be written in one or more of programming languages, for example, in C, with, for example, instructions for the preprocessor, which do not belong to the programming language as such.

Also, the method 800 may include a step S803S of searching in the firmware source code 801 for the plurality of top-level header files 840 for the generating step S804A. The searching step S803 may include reading names and file paths of the plurality of top-level header files 840-TH1.... 840-THk from one or more optional component manifest file, shown at 860 in Fig. 8A, and accessing the plurality of top-level header files 840-TH1.... 840-THk based on these file paths and names.

In the above variations of the method 800, the method may include a step S804P of generating a preprocessed amalgamated header file 807AP by invoking an at least one program from (a) a standalone preprocessor; (b) a preprocessor of a compiler, wherein the preprocessor is separately invokable; and (c) a compiler. Herein, the compiler may be a cross-compiler. The preprocessor, in the compiler or a standalone, and the compiler may belong to a toolchain. The preprocessor substitutes various preprocessor instructions and adds to the declarations from the top-level header files lower level declarations from the nested header files, as well as declarations from the programming language realization. Thus, it allows including needed declarations from the nested header files and the language realization into the API and needed declarations from the nested header files into the SDK. For example, the GNU C compiler's preprocessor may perform such preprocessing if invoked with the specific option.

Then, the method may include a step S805P of parsing the preprocessed amalgamated header file 807AP to generate a deep declaration table 807DT including a plurality of declarations from the proprocessed amalgamated header file 807AP. This step is useful for filtering out those declarations, which are clearly not needed in the SDK and API; for example, in many cases such declarations may come from the programming language realization.

Also, the method 800 may include a step S805S of storing API indicator data 805I, which indicate for each declaration in the deep declaration table 807DT whether the declaration is for an API entity from the API or not for an API entity from the API. Optionally, the storing includes adding the API indicator data 805S to the deep declaration table 807DT (thereby updating it).

In a further example, the method 800 may include a step S805D of displaying at least a part of the deep declaration table 807DT on a screen, and a step S805C of collecting at least a part of the API indicator data 805I from a human-computer interface for the step S805S of storing the API indicator data. Alternatively, the step S805S may be based on data received by the computer implementing method 800 in a file via a network, for example, from a customer who has ordered the development of the SDK.

In the variations of the method 800 including the step S805S the API indicator data 805I may indicate for at least one declaration present in the deep declaration table 807DT and in the plurality of header files 840 that this at least one declaration is not for an API entity from the API. Alternatively, or additionally the API indicator data 805I may indicate for at least one declaration present in the deep declaration table 807DT and not present in the plurality of header files 840 that this at least one declaration is for an API entity from the API. Such options allow creating APIs and SDKs with an improved usability and customizability of the firmware and independent programs for the MMU-less device.

Also, the method 800 may include a step S806 of including (i.e. adding) the deep declaration table S805DT along with, and optionally containing the API indicator data S805I, into the SDK.

The method 800 in its different variations may include a step S806VI of generating an API version indicator for the API. The API version indicator indicates whether the API is incompatible with at least one previous API by a difference with respect to a previous API version indicator. This step S806VI may include comparing the declarations of the API entities in the deep declaration table 807DT with previous declarations of previous API entities in a previous deep declaration table, and finding the lack of the compatibility if at least one of the previous API entities is not presented or is incompatibly presented among the API entities. The incompatibility may arise, for example, from a change in a data type of some input in some declaration, or a change in a data type of some output, or a change in order or quantity of inputs or outputs in this declaration. There may be more than AP version indicator: for example, a major indicator and a minor indicator, with the increase in the major indicator (series, for example 7 in the version 7.0) indicating an incompatibility with the previous version (for example, 6.5).

Also, this method 800 may include a step S806V of including (i.e. adding) the version indicator into the SDK, optionally by recording it into the deep declaration table. This recording may be performed before or after copying this deep declaration table into the SDK.

The version indicator may be used to avoid loading an executable file, formed by using the SDK, or running a program from the executable file by the MMU-less device: the device may be configured to compare the version indicators in the executable file and in the firmware of the MMU-less device, to check whether the executable file is compatible with the firmware.

The method 800 in any of its variations may include a step S804PD being a modification of the step S804P. comprising generating a dependency file 807DF besides the preprocessed amalgamated header file 807AP. This may be implemented, for example, by invoking the at least one program (as one of the above: (a) the standalone preprocessor; (b) the preprocessor of the compiler, wherein the preprocessor is separately invokable; and (c) the compiler) with a further specific option, for example, -MMD and/or -MF in case of the GNU C preprocessor. Also, step S804PD is used to store the dependency file 807DF after an end of the preprocessing S804PD and, optionally, after exiting the program, such as the compiler. Consequently, the dependency file 807DF stores a name and file path of a single copy of each file from the plurality of header files.

Further, the above method may include a step S806C of copying, based on the dependency file 807DF, the plurality of header files 840 from the firmware source code 801, to include the single copy of each of the plurality of header files 840 in the SDK. However, optionally one or more header file from the plurality 840 may be excepted from inclusion into the SDK: the API indicator data 805I may indicate that this one or more header file is not included in the API.

Additionally, the above method may include placing the plurality of header files 840 into a directory structure in the SDK replicating a corresponding directory structure in the firmware source code 801. Optionally, the exception discussed above is taken into account: there is no need to create a folder or a branch or a leaf of the directory tree in the SDK if it would be only for a header file which would not be included into the SDK.

In all variations of the method 800, a header file from the firmware source code 801 may declare a hash function with an argument being a string. Optionally, this hash-function-declaring header file does not belong to the plurality 840 of the (potentially public) header files (i.e. the plurality that may be arranged by using the component manifest file and finding the respective nested header files by using the preprocessor or the compiler, e.g. by using the dependency file 807DF). In other words, this hash-function-declaring header file may belong to the different one or more header file 850 (i.e. to be a private header file).

Furthermore, the method 800 may include a step S880A of generating, based on the deep declaration table 807DT along with and optionally including the API indicator data 805I, and based on the firmware source code 801, a compilable file 880A, which may be an implementation file or a header file. The compilable file 880A includes an array of structures. Each structure in this array includes:
an invocation of the hash function with an argument being a name of an API entity, and
a reference to an address of the API entity.

Further, the compilable file includes an invocation of a sorting procedure for the array of the structures according to the hash values calculated by invocations of the hash function. Also, the invocations of the hash function and the sorting procedure may be executable by the at least one program (from the standalone preprocessor; the preprocessor of the compiler, wherein the preprocessor is separately invokable; and the compiler).

Alternatively, the method 800 may include a step S880B of generating, based on the deep declaration table 807DT along with and optionally including the API indicator data 805I, and based on the firmware source code 801, a compilable file 880B, which may be an implementation file or a header file. In this case the compilable file also includes an array of structures, but each structure includes:
a hash value calculated by applying the hash function to a name of an API entity, and
a reference to an address of the API entity,

Herein, the array may be sorted according to the hash values in the structures.

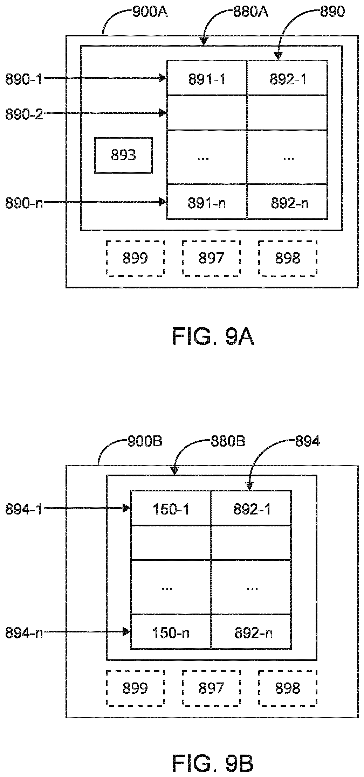

In a further aspect of the present disclosure, there is provided a computer-readable memory storage for use in preparing a firmware for an MMU-less device. An example of such storage 900A is provided in Fig. 9A. The firmware is to include an application program interface (API) including a plurality of API entities. The memory storage 900A stores a compilable file 880A, as above, optionally being an implementation file or a header file. The compilable file 880A includes an array 890 of structures 890-1, ... , 890-n, and each structure includes:
a respective invocation from 891-1, ... , 890-n of a hash function with an argument being a string presenting a name of an API entity (respective API entity), and
a respective reference 892-1, ...892-n to an address of the API entity.

Also, the compilable file includes an invocation 893 of a sorting procedure for the array 890 of the structures according to the hash values calculated by invocations of the hash function. These invocations 891-1, ... , 890-n and 893 of the hash function and the sorting procedure may be executable by an at least one from a standalone preprocessor, a preprocessor of a compiler, and a compiler.

Alternatively, a computer-readable memory storage 900B is schematically shown in Fig. 9B. This storage is also suitable for use in preparing, for an MMU-less device, a firmware including an API with a plurality of API entities. The memory storage 900B stores a compilable file 880B, optionally being an implementation file or a header file. The compilable file 880B includes an array 894 of structures 894-1, ... 894-n. Each structure includes:
a respective hash value from 150-1, ...150-n calculated by applying a hash function to a string presenting a name of an API entity, and
a respective reference 892-1, ...892-n to an address of the API entity,

The array may be sorted according to the hash values 150-1, ... 150-n in the structures, in an increasing or decreasing order.

According to an example, each reference 892-1, ...892-n used in either variation of the computer-readable memory storage may be a code of a command of obtaining an address applied to the respective API entity referred to by its name (for instance: ".address=&LL_Comp_Init").

Also, the computer-readable memory storage i.e. in any variation such as 900A and 900B may include an implementation 897 of the hash function for including the hash function into a loader component of the firmware.

The computer-readable memory storage 900A or 900B may be presented by a hard drive or another memory device of the software developer computer. It may store the compiler 898, optionally being a cross-compiler. Furthermore, the computer-readable memory storage may store a linker 899 for preparing an executable file presenting the firmware and configured to replace the references to the addresses with addresses configured for a memory of the MMU-less device.

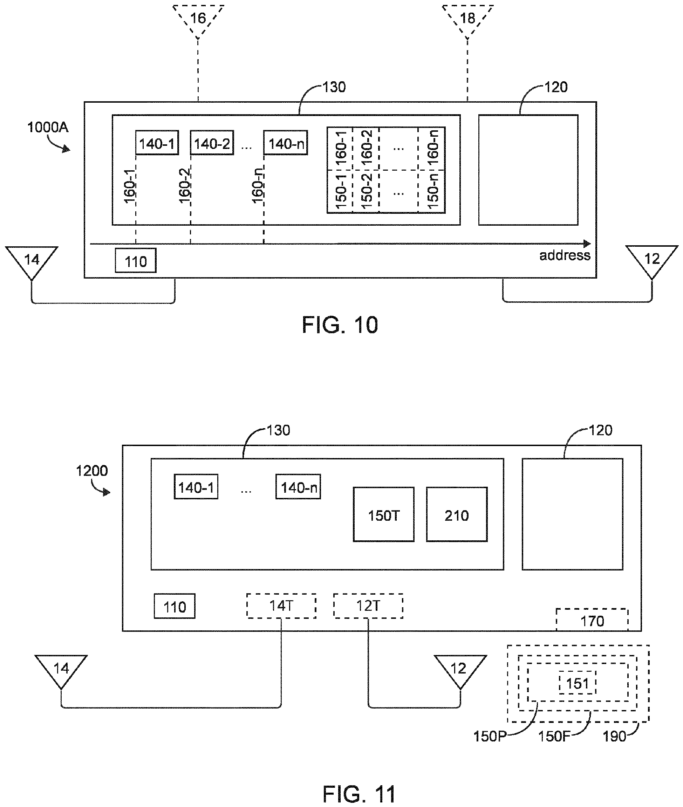

In view of the above, referring to Fig. 10, there is schematically shown a MMU-less device 1000A configured similarly the MMU-less device 100A, but with explicitly shown antennas 12 and 14, and optional antennas 16 and 18. That is, the device 1000A presents an example of a MMU-less device according to the present disclosure with at least two antennas, and in a configuration with at least one of the optional antennas 16 and 18 being present, an example of a MMU-less device according to the present disclosure with at least three antennas. Each antenna, with which the MMU-less device 1000A is equipped, may be used for receiving or transmitting signals at at least its respective associated frequency or channel. The MMU-less device may include one or more channel selection section for setting each such frequency. For example, the channel selection section may include a fractional PLL (phase-locked loop), Additionally, or alternatively, each antenna may be tunable (i.e reconfigurable); and the device MMU-less device 1000A may include an antenna tuner (an antenna tuning section) for one or more of the antennas for changing the respective one or more frequency. Also, the device 1000A may include one or more switches (switching sections) for switching between receiving and transmitting for one or more of the antennas. Each antenna may be directional or omni-directional. For another example, one or more of the antennas may be included in the interface for receiving the program (for instance, from an external communication device or an external memory, for example, a non-volatile chip storage).

Also, a MMU-less device may be configured as any of other MMU-less devices above, by using antennas and various sections in a similar way as explained with the reference to Fig. 10. For example, the device 100B in Fig. 1B may be equipped with antennas 12 and 14, and optionally with at least one of the antennas 16 and 18. The interface 170 in Fig. 1B may use one or more of these antennas.

Fig. 11 presents another example, a MMU-less device 1200, configured similarly the MMU-less device 200, but with explicitly shown antennas 12 and 14. Similarly to the above examples, the device 1200 may include more antennas than explicitly shown in Fig. 11. This figure also explicitly shows transceiving sections 12T and 14T, each, for example, for choosing between reception and transmission for a respective antenna. Each transceiving section may include a switch controllable, for example, by the at least one processor 110. Each of the transceiving sections may include the channel selection section and/or the tuning section. The transceiving sections, for example, 12T and 14T, may form a greater transceiving section serving more than one antenna.

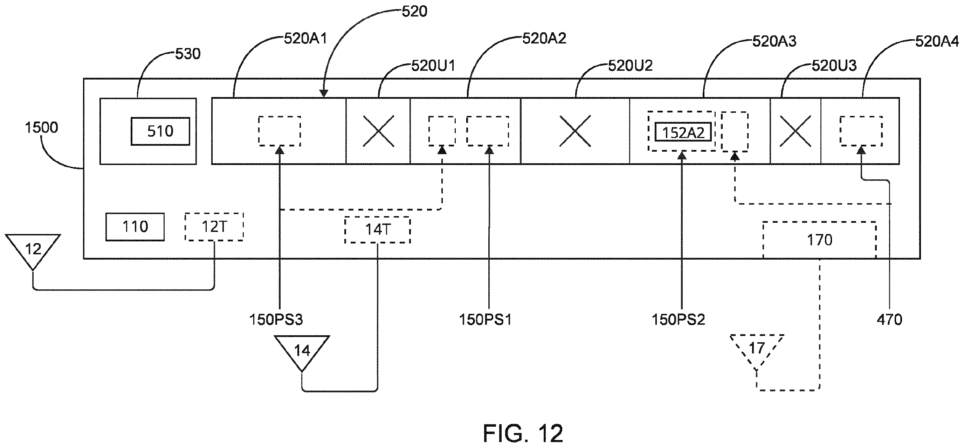

In Fig. 12 a further example of a MMU-less device, 1500, is presented. The MMU-less device is configured similarly to the MMU-less device 500, but further includes antennas 12 and 14 with respective optional transceiving sections. Also, it includes an optional antenna 17 usable by the interface 170 for receiving the program 150P.

Similarly, the method 700 described with reference to Fig. 7, and other methods according to the present disclosure may be applied to the MMU-less device as above, including at least two or three antennas, each for receiving and/or transmitting signals at at least its respective associated frequency.

According to the present disclosure, the API entities, such as 140-1, 140-2, ..., 140-n, may include among them a first API entity for transmitting a signal using at least a first antenna from the antennas of the MMU/less device and/or for receiving a signal using the at least first antenna from the antennas of the MMU/less device. For example, in the devices 1000A, 1200, 1500, any antenna from 12, 14, 16, 17 and 18 may be the first antenna; for instance, antenna 14 may be the first antenna. The first API entity may be any of the entities 140-1, 140-2, ..., 140-n, for example, 140-2. It, for example, may present an instruction, which, when implemented by the at least one processor 110, causes it to send an appropriate switching signal, optionally along with transmission data, to the first antenna (for example, to a transceiving section or switching section of the first antenna for starting the transmission or reception). Also, the first API entity may have such a code that it would invoke the transmission and/or reception for more antennas: for example, antenna 12.

Further, the API entities of the MMU-less device may similarly include among them a second API entity for transmitting signals using at least a second antenna from the antennas of the MMU-less device and/or for receiving using the at least second antenna from the antennas of the MMU-less device. For example, in the devices 1000A, 1200, 1500 the second antenna may be the antenna 12.

Optionally, the API entities of the MMU-less device may similarly include among them a third API entity for transmitting a signal using at least a third antenna from the antennas of the MMU-less device and/or for receiving a signal using the at least third antenna from the antennas of the MMU-less device.

Furthermore, for the MMU-less device with at least one changeable frequency, one or more from the first to third API entities, or a different API entity, may include a code for changing this frequency. For example, the code, when implemented by the processor, may cause the channel selection section for one or more of the antennas 12, 14, 16, 17 and 18 to change the channel, and/or it may cause the antenna tuning section to change the frequency.

A certain antenna from the antennas of the MMU-less device (for example, 1000A, 1200 or 1500) may be operable in a Sub-GHz range, or near-field communication, NFC, range, or a LF RFID range, i.e. may be configured to have a peak gain in the respective region. In this context, any antenna of the of the MMU-less device may be such a certain antenna. For example, antenna 12 may be the certain antenna, and it may be operable in a Sub-GHz range (and may be not useful in NFC and LF RFID range). Another antenna from antennas of the MMU-less device may be operable in a range being the Sub-GHz range, or the NFC range, or the LF RFID range and different from the range of the certain antenna. That is, when the certain antenna is antenna 12, another antenna may be antenna 14, and when the antenna 12 is operable in the Sub-GHz range, antenna 14 may be operable in NFC or LF RFID range (and may be not useful in the Sub-GHz range). Similarly, optionally, yet another antenna is operable in a range being the Sub-GHz range, or the NFC range, or the LF RFID range and different from the range of the certain antenna and the above mentioned another antenna. For example, antenna 18 may be present in the MMU-less device, and it may be operable in the LF RFID range (while antenna 12 is operable in the Sub-GHz range and antenna 14 is operable in the NFC range).

Additionally, in the MMU-less device (for example, 1500, presented above with reference to Fig. 12), at least one of the allocatable sections (for example, 150PS1-150PS3 in Fig.3) may include an invocation of an API entity for transmitting a signal using at least one antenna from antennas of the MMU-less device (in Fig. 12 the antennas 12 and 14 and the optional antenna 17 are explicitly shown) and/or for receiving a signal using the at least one antenna from the antennas of the MMU-less device. For example, In Fig. 3 any invocation starting with 151 may be the invocation of such an API entity. Furthermore, one or more of the at least one of the allocatable sections may include an invocation of the same or a different API entity to cause the channel selection section for one or more of the antennas of the MMU-less device to change its frequency channel, and/or it may cause the antenna tuning section to change this frequency.

Also, in the method 700 described with reference to Fig. 7, and various other methods according to the present disclosure, applied to the MMU-less device including at least two or three antennas, a certain API entity may be for transmitting a signal using at least one antenna from the antennas of the MMU-less device and/or for receiving a signal using the at least one antenna from the antennas of the MMU-less device. Furthermore, as above, the same or a different API entity may include a code which, when implemented by the processor, would cause the channel selection section for one or more of the antennas of the MMU-less device to change the frequency channel of some respective antenna, and/or cause the antenna tuning section for one or more of the antennas of the MMU-less device to change the frequency channel of the respective antenna.

Although the present disclosure and its advantages have been described in detail, it should be understood that various changes, substitutions and alterations can be made herein without departing from the scope of the disclosure or the appended claims.

## Claims

1. A memory management unit-less (MMU-less) device for receiving and executing a program comprising an invocation of an application program interface (API) of the MMU-less device, wherein the MMU-less device comprises an at least one processing unit, a RAM, a built-in non-volatile memory storing API entities, and at least two or three antennas, each for receiving and/or transmitting signals at at least its respective associated frequency, wherein:
the built-in non-volatile memory stores an API table of sorted API name hashes and addresses, comprising a sorted plurality of hash values, calculated based on a plurality of names of API entities and paired with a plurality of addresses of the API entities.

2. The MMU-less device of claim 1, wherein the API entities comprise among them a first API entity for transmitting a signal using at least a first antenna from said antennas and/or for receiving a signal using the at least first antenna from said antennas; optionally comprise among them a second API entity for transmitting a signal using at least a second antenna from said antennas and/or for receiving a signal using the at least second antenna from said antennas, and optionally comprise among them a third API entity for transmitting a signal using at least a third antenna from said antennas and/or for receiving a signal using the at least third antenna from said antennas.

3. The MMU-less device of any of the preceding claims, wherein a certain antenna from the at least two or three antennas is operable in a Sub-GHz range, or near-field communication, NFC, range, or a LF RFID range; another antenna from the at least two or three antennas is operable in a range being the Sub-GHz range, or the NFC range, or the LF RFID range and different from the range of the certain antenna; and, optionally, yet another antenna is operable in a range being the Sub-GHz range, or the NFC range, or the LF RFID range and different from the range of the certain antenna and said another antenna.

4. The MMU-less device of any of the preceding claims, wherein the API table comprises at least 500, or 1000, or 2000 hash values.

5. The MMU-less device of any of the preceding claims, wherein the built-in non-volatile memory or the RAM stores a loader component for loading an at least one executable section from an executable file, comprising the program, into the RAM.

6. The MMU-less device of claim 5, wherein the loader component is configured to determine a relocation value for an at least one bit, corresponding to said invocation, in a section comprising the invocation, which is (a) the at least one executable section or (b) another allocatable section loaded into the RAM from the executable file.

7. The MMU-less device of claim 6, wherein the loader component is configured to determine the relocation value by searching for an address in the API table, wherein the search is based on a hash value of a name of an API entity.

8. The MMU-less device of any one of claims 5 to 7, wherein the loader component is configured to load a plurality of allocatable sections from the executable file into available blocks in the RAM, to record in the RAM a table of correspondence between the allocatable sections of said plurality and addresses at which the allocatable sections are loaded, and to perform at least one relocation for an invocation from one of the allocatable sections of said plurality to the same or another of the allocatable sections of said plurality based on said table of correspondence.

9. A memory management unit-less (MMU-less) device comprising an at least one processing unit, a RAM, a built-in non-volatile memory of the MMU-less device, and at least two antennas, each for receiving and/or transmitting signals at at least its respective associated frequency, wherein:
the built-in non-volatile memory or the RAM stores a loader component to load a plurality of allocatable sections from the executable file into available blocks in the RAM, to record into the RAM a table of correspondence between the allocatable sections of said plurality and addresses at which the allocatable sections are loaded, and to perform at least one relocation for an invocation from a one of the allocatable sections of said plurality to the same or another of the allocatable sections of said plurality based on said table of correspondence.

10. The MMU-less device of claim 9, wherein a certain antenna from the at least two or three antennas is operable in a Sub-GHz range, or near-field communication, NFC, range, or a LF RFID range; another antenna from the at least two or three antennas is operable in a range being the Sub-GHz range, or the NFC range, or the LF RFID range and different from the range of the certain antenna; and, optionally, yet another antenna is operable in a range being the Sub-GHz range, or the NFC range, or the LF RFID range and different from the range of the certain antenna and said another antenna.

11. The MMU-less device of claim 9 or 10, wherein at least one of the allocatable sections comprises an invocation of an API entity for transmitting a signal using at least one antenna from said antennas and/or for receiving a signal using the at least one antenna from said antennas.

12. The MMU-less device of any claim from 8 to 11, wherein the loader component is configured to load at least one allocatable section thereby occupying a first available byte in the RAM and an at least one allocatable section thereby occupying a second available byte in the RAM, wherein the loader component avoids writing into a byte in the RAM between the first and the second available bytes, wherein optionally this byte is allocated to a program different from the received program.

13. The MMU-less device of any of preceding claims, wherein
(k) the MMU-less device comprises an at least one user interface input and/or at least one output unit; and/or
(l) the MMU-less device is a handheld or mobile device; and/or
(m) the MMU-less device comprises at least four or five antennas for acting at respectively at least four or five frequencies, and/or
(n) the MMU-less device comprises a MMU-less microcontroller comprising two processing units, wherein one of them is a central processing unit and the other is a dedicated processing unit for processing radio stack data; and/or
(o) the built-in non-volatile memory comprises memory of at least one of EEPROM and flash type, and/or
(p) a total volume of the built-in non-volatile memory of the MMU-less device does not exceed 8 MB, 4 MB, or 2 MB, or 1 MB; and/or
(q) a total volume of the RAM of the MMU-less device does not exceed 1 MB; and/or
(r) the MMU-less device lacks at least a hardware MMU; and/or
(s) the API entities are of a firmware or an operating system of the MMU-less device; and/or
(t) the MMU-less device is configured for receiving the program from an external storage being a communication device or an external memory, which optionally may be a non-volatile memory, which optionally may be a non-volatile chip storage.

14. A method comprising sending from a communication device to a memory management unit-less (MMU-less) device comprising at least two or three antennas, each for receiving and/or transmitting signals at at least its respective associated frequency, or recording into a non-volatile chip storage an executable file storing a program for the MMU-less device and comprising at least one allocatable section, which comprises at least one bit recorded as requiring a relocation, wherein
the executable file comprises a symbol table section,
an entry in the symbol table section corresponding to the at least one bit comprises a section header index of a zero value or of a different value not corresponding to any section from the executable file, or does not comprise any section header index; and
the entry comprises a name index of an API entity of an operating system for the MMU-less device.

15. The method of claim 14, wherein the API entity is for transmitting a signal using at least one antenna from said antennas and/or for receiving a signal using the at least one antenna from said antennas.
